# EUROPEAN PATENT APPLICATION

(11) **EP 2 105 116 A2**
(43) Date of publication of application: **30.09.2009**
(21) Application number: 09151401.8
(22) Date of filing: 27.01.2009
(51) Int. Cl.: A61G 5/10

(54) **Releasable coupling apparatus**

(30) Priority: 27.03.2008 GB 0805546
(71) Applicant: Specmat Limited, Leominster, Herefordshire HR6 9QA (GB)
(72) Inventor: Suddaby, Thomas Paul, Newent, Gloucestershire GL18 1TZ (GB); Nelson, Sean Patrick, Wrexham, Clwyd LL13 9GY (GB)
(74) Representative: Evens, Paul Jonathan

(57) **Abstract**

Apparatus (30) for releasably coupling an elongate member (34) to a support member (36), comprising:
a first coupling part (40) for attachment to an elongate member (34);
a second coupling part (50) for attachment to a support member (36), the first and second coupling parts (40, 50) having interengageable profiles;
a releasable locking mechanism (60) for locking the first and second coupling parts (40, 50) together to resist relative movement therebetween once their respective profiles are interengaged;
wherein the first and second coupling parts (40, 50) and the releasable locking mechanism (60) are configured such that the first coupling part (40) is lockable relative to the second coupling part (50) in one of two predetermined configurations which are angularly spaced about a central axis.

## Description

### TECHNICAL FIELD

The present invention relates to apparatus for releasably coupling an elongate member to a support member and more particularly, but not exclusively, a wheelchair including such releasable coupling apparatus.

### BACKGROUND ART

Figure 1 shows a wheelchair 10 of the kind known from WO2006/106324 and comprising a seat frame 12 mounted on a chassis 14. The seat framework 12 includes a backrest 16 comprising a pair of upright elongate frame members 18. Frame members 18 carry inter alia a head rest 20, a seat back cushion 22 and a thoracic support 24.

The thoracic support 24 forms part of the postural management system, supporting a child's upper torso to assist prevention, if not correction, of spinal deformities and as such must be set up by a healthcare professional. Known thoracic supports also have a facility whereby non-professionals can swing the support away from its set position to allow the transfer and/or care of the chair occupant and thereafter swing the support back to the set position.

The present inventors have identified a deficiency with known thoracic supports, namely that they do not allow a non-professional to adjust a support to accommodate minor changes in the transverse dimension of the chair occupant, e.g. resulting from the wearing of thicker clothing to suit variations in ambient temperature, e.g. due to seasonal variations and/or movement from indoors to outdoors and vice versa. The present invention has as an objective the mitigation of this deficiency.

### DISCLOSURE OF INVENTION

In accordance with a first aspect of the present invention, there is provided apparatus for releasably coupling an elongate member to a support member, comprising: a first coupling part for attachment to an elongate member; a second coupling part for attachment to a support member, the first and second coupling parts having interengageable profiles; a releasable locking mechanism for locking the first and second coupling parts together to resist relative movement therebetween once their respective profiles are interengaged; wherein the first and second coupling parts and the releasable locking mechanism are configured such that the first coupling part is lockable relative to the second coupling part in one of two predetermined configurations which are angularly spaced about a central axis.

The present applicant has appreciated that by providing two predetermined positions or configurations for locking the first and second coupling parts together, the apparatus provides reliable positioning of the elongate member in one of two positions. This may be very useful in certain applications, such as when coupling a thoracic support to the frame of a wheelchair. In such a situation, the thoracic support may be readily adjusted between an "indoor" setting and an "outdoor" setting to accommodate a different thickness of clothing worn by the occupant of the wheelchair. The angular spacing between the two predetermined configurations may be less than 30°, and may even be less than 15°. For example, the angular spacing may be about 10°.

One coupling part may comprise a rotatable cam member, and the other coupling part may have a drive surface engagable by the rotatable cam member. The rotatable cam member and the drive surface may be configured such that rotation of the cam member drives angular movement of the first coupling part relative to the second coupling part about the central axis when the profiles are interengaged. The rotatable cam member and the drive surface may be configured to drive the first and second coupling parts into one of the two predetermined positions when the cam member is rotated in a clockwise direction, and to drive the first and second coupling parts into the other of the two predetermined positions when rotated in a counter-clockwise direction. The drive surface may have two portions which may be on opposite sides of the rotatable cam member.

The releasable locking mechanism may comprise a lever coupled to the rotatable cam member and configured to aid manual rotation thereof. In this way, the lever enables a user to rotate the cam member when driving the coupling parts between engagement configurations. The releasable locking mechanism may further comprise at least one catch for retaining the lever when the first and second coupling parts are in one of the two predetermined positions. The at least one catch may have a surface which is a friction fit against the lever when the first and second coupling parts are in one of the two predetermined positions. The surface may be configured to provide a snap fit action when the first and second coupling parts are driven into one of the two predetermined positions.

The second coupling part may include a body in the form of a split-ring with a clamp for tightening the body around an elongate support member. The first coupling part may include a body with a substantially circular aperture for receiving an elongate support member therethrough so that the first coupling part may slide therealong. In this way, the first coupling part may rotate around the elongate support member, relative to the second coupling part, for example when moving the first coupling part between the two predetermined configurations.

In accordance with another aspect of the present invention, there is provided a wheelchair comprising a frame and a thoracic support, the throracic support including an elongate member which is coupled to the frame with the apparatus according to the first aspect of the present invention.

According to another aspect of the present invention, there is provided a support assembly for a chair or the like, the support assembly comprising: a support; a first adjustment mechanism configured to allow the support to be locked in a first position relative to the chair; and a second adjustment mechanism configured to allow the support to be locked in two preset positions relative to said first position.

As noted above, the present inventors have established the, previously unidentified, need for minor variations in the support position set up by a healthcare professional in order to accommodate minor variations in the effective dimensions of the wheelchair occupant resulting e.g. from changes in clothing. The second adjustment mechanism of the present invention provides two preset positions relative to the support position set up by the healthcare professional which allow for such minor variations in the effective dimensions of the wheelchair occupant.

According to yet another aspect of the present invention, there is provided apparatus for attaching a first member to a second member, the apparatus comprising: a first part for attachment to the first member and a second part for attachment to the second member; the first and second parts being connected by: a first adjustment mechanism configured to allow the first part to be locked in a first range of angular positions relative to the second part; and, in series therewith, a second adjustment mechanism configured to allow the first part to be locked in a second range of angular positions relative to the second part, the second range of angular positions being narrower than the first range of angular positions.

By virtue of the second adjustment mechanism, it is possible to adjust the relative angular position of first and second members connected to the first and second parts, albeit over a narrower range than that permitted by the first adjustment mechanism. In the context of a support of a wheelchair as described above, the second mechanism allows a non-professional to adjust the support to accommodate minor changes in the effective transverse dimension of the chair occupant, e.g. resulting from the wearing of thicker clothing in winter, without disturbing the overall positioning of the support as determined by the first adjustment mechanism which has been set by a healthcare professional.

### BRIEF DESCRIPTION OF DRAWINGS

An embodiment of the invention will now be described by way of example with reference to the accompanying drawings, in which:

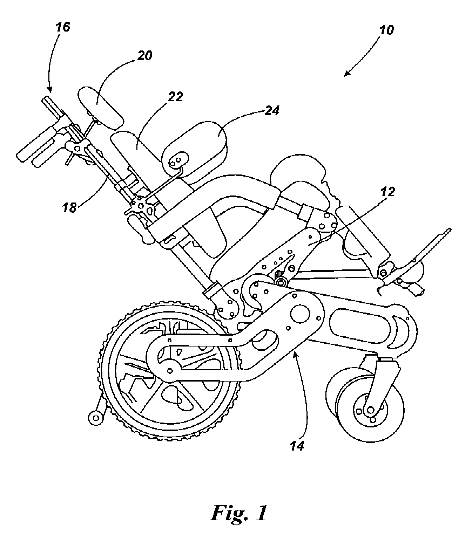

Figure 1 is a side view of a wheelchair of the kind known from WO 2006/106324;
Figure 2 is a perspective view of a thoracic support assembly incorporating apparatus according to the present invention;
Figure 3 is an exploded view of the assembly of figure 2; and
Figures 4A and 4B schematically illustrate operational details of the apparatus of figure 2.

### DETAILED DESCRIPTION OF SPECIFIC EMBODIMENTS

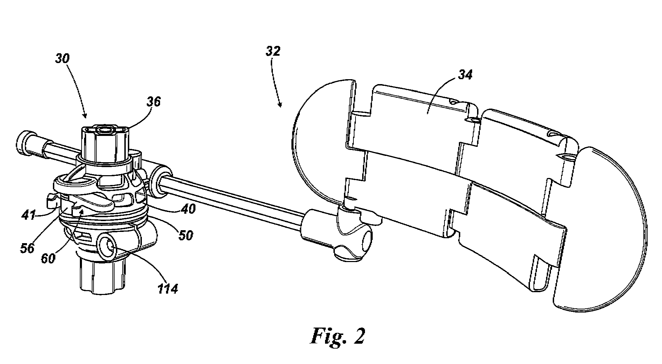

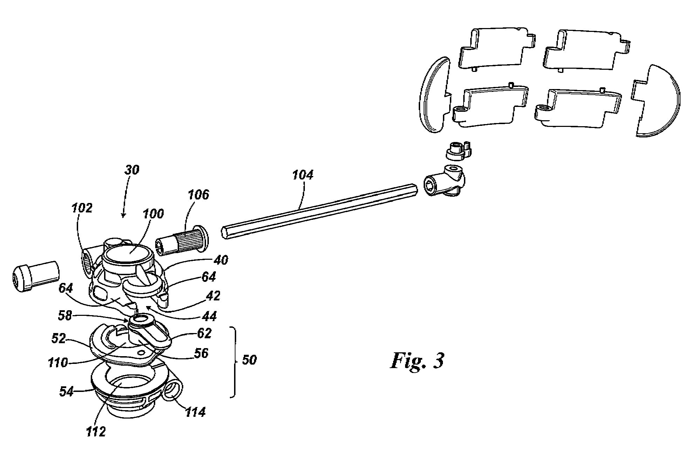

Figure 2 is a detailed perspective view of apparatus 30 for releasably coupling an elongate member 34 to a support member 36 which is part of the framework of a wheelchair. As best shown in figure 3, the apparatus 30 comprises a first coupling part 40 and a second coupling part 50 (made up of upper collar 52 and lower collar 54 which in use nest together). The first and second coupling parts 40, 50 have interengageable profiles including opposed side walls 41, 42 of channel 44 in the first coupling part 40, and the outer surface 56 of a rotatable cam member 58 which is rotatably mounted on the second coupling part 50 (notably upper collar 52). The apparatus 30 further comprises a locking mechanism 60 including a lever 62 mounted on the cam member 58 to rotate therewith, and catches 64 mounted on the first coupling part 40 on either side of the channel 44 to retain the lever 62 when urged into contact therewith. In this way, the first coupling part 40 is lockable relative to the second coupling part 50 in one of two different positions about a central axis defined by the longitudinal axis of support member 36.

The first coupling part 40 has a substantially circular aperture 100 for receiving the elongate support member 36 therethrough. The first coupling part 40 also has a bore 102 for receiving hex-rod 104 therethrough, together with sleeve 106. The sleeve 106 is a snug fit around the hex-rod 104, which in turn is a snug fit inside bore 102. A clamping screw (not shown) is used tighten the bore 102 around the sleeve 106 and hex-rod 104, preventing linear and rotational movement of the hex-rod 104 relative to the apparatus 30. The thoracic support 34 is mounted on one end of the hex-rod 104.

The upper and lower collars 52, 54 of the second coupling part 50 have respective apertures 110, 112 for receiving the elongate support member 36 therethrough. Both the upper and lower collars 53, 54 are of split-ring form. The lower collar 54 fits around a portion of the upper collar 52, and includes a clamp 114 for tightening the lower collar 54 around the upper collar 52 which in turn is urged tight against the elongate support member 36. The cam member 58 is mounted on the upper collar 52 by a pin 120 such that the cam member 58 is rotatable around the pin 120.

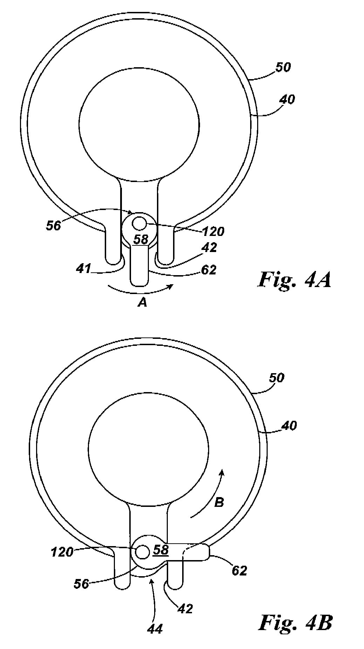

Figures 4A and 4B illustrate the action of the cam member 58 against the side wall 42 of the channel 44. When the can member 58 and side wall 42 are brought into engagement, the cam member 58 and lever 62 are in a "neutral" position as shown in figure 4A. By rotating the cam member 58 about pin 120 in the direction of Arrow A (using the lever 62), the outer surface 56 of the cam member 58 pushes against the side wall 42, causing the first coupling part 40 to rotate in the direction of Arrow B relative to the second coupling part 50. When the lever 62 reaches the "active" position illustrated in figure 4B, it engages the catch 64 with a snap-fit action. By rotating the cam member 58 in the direction opposite to Arrow A, outer surface 56 will push against the side wall 41 of channel 44, and the first coupling part 40 will rotate in a direction opposite to Arrow B relative to the second coupling part 50. In this way, the first coupling part 40 may be moved into either of two predetermined positions relative to the second coupling part 50. The two predetermined positions may result in an angular displacement about a central axis (parallel to the elongate support member 36) of the first coupling part 40 relative to the second coupling part 50 of about 10 degrees.

## Claims

1. Apparatus for releasably coupling an elongate member to a support member, comprising:
a first coupling part for attachment to an elongate member;
a second coupling part for attachment to a support member, the first and second coupling parts having interengageable profiles;
a releasable locking mechanism for locking the first and second coupling parts together to resist relative movement therebetween once their respective profiles are interengaged;
wherein the first and second coupling parts and the releasable locking mechanism are configured such that the first coupling part is lockable relative to the second coupling part in one of two predetermined configurations which are angularly spaced about a central axis.

2. Apparatus according to claim 1, in which one coupling part comprises a rotatable cam member and the other coupling part has a drive surface engagable by the rotatable cam member, with the cam member and the drive surface being configured such that rotation of the cam member drives angular movement of the first coupling part relative to the second coupling part into one of the two predetermined configurations.

3. Apparatus according to claim 2, in which the rotatable cam member is configured to drive the first and second coupling parts into one of the two predetermined configurations when rotated in a clockwise direction, and into the other of the two predetermined configurations when rotated in a counter-clockwise direction.

4. Apparatus according to any one of the preceding claims, in which the releasable locking mechanism comprises a lever coupled to the rotatable cam member and configured to rotate therewith.

5. Apparatus according to claim 4, in which the releasable locking member comprises at least one catch for retaining the lever when the first and second coupling parts are in one of the two predetermined configurations.

6. Apparatus according to claim 5, in which the at least one catch has a surface which is a friction fit against the lever when the first and second coupling parts are in one of the two predetermined configurations.

7. Apparatus according to claim 6, in which the surface is configured to provide a snap fit engagement with the lever when the first and second parts are driven into one of the two predetermined configurations.

8. Apparatus according to claim 7, in which the second coupling part includes a body in the form of a split-ring with a clamp for tightening the body around an elongate support member.

9. Apparatus according to claim 8, in which the first coupling part includes a body with a substantially circular aperture for receiving an elongate support member therethrough.

10. A wheelchair comprising a frame and an elongate member (e.g. thoracic support), the elongate member being releasably coupled to the frame with the apparatus of any one of claims 1 to 9.
